# EUROPÄISCHE PATENTANMELDUNG

(11) **EP 4 431 073 A1**
(43) Veröffentlichungstag der Anmeldung: **18.09.2024**
(21) Anmeldenummer: 23161736.6
(22) Anmeldetag: 14.03.2023
(51) Int. Cl.: A61G 7/05, B60B 33/02

(54) **LENKROLLENANORDNUNG FÜR EIN MÖBEL, INSBESONDERE EIN BETT UND BETT, INSBESONDERE MEDIZINISCHES BETT MIT DER LENKROLLENANORDNUNG**

(71) Anmelder: Wissner-Bosserhoff GmbH, 58739 Wickede (DE)
(72) Erfinder: Naujoks, Tobias, 58739 Wickede (DE)
(74) Vertreter: Graefe, Jörg

(57) **Zusammenfassung**

Die Erfindung betrifft eine Lenkrollenanordnung (L) für ein Möbel, insbesondere für ein Bett,
- mit einem Halter (2),
- mit einer ersten Lenkrolle (3),
- wobei die erste Lenkrolle (3) ein Rad (32) und einen Rahmen (31) aufweist,
- wobei das Rad (32) an dem Rahmen (31) um eine erste Drehachse drehbar befestigt ist, die in einer ersten Ebene liegt, und
- wobei der Rahmen (31) zumindest mittelbar an dem Halter (2) um eine zweite Drehachse drehbar befestigt ist, die senkrecht zu der ersten Ebene liegt,

- mit einem U-förmigen Bügel (5), der zwei Schenkel (52) und einen die Schenkel (51) verbindenden Steg aufweist,
- wobei die Schenkel (52) zumindest mittelbar um eine dritte Drehachse schwenkbar an dem Halter (2) befestigt sind, die in der ersten Ebene oder in einer Ebene parallel zu der ersten Ebene liegt,
- wobei der Bügel (5) um die dritte Drehachse zwischen einer ersten Position und einer zweiten Position schwenkbar ist,
- wobei der Bügel (5) dann in die zweite Position bewegbar ist, wenn erste Drehachse und die dritte Drehachse im Wesentlichen parallel sind oder zusammenfallen,
- wobei das Rad (32) in der zweiten Position zwischen den beiden Schenkeln (52) des Bügels (5) angeordnet ist, so dass eine freie Drehung Rahmens (31) um die zweite Drehachse beschränkt ist,
- wobei das Rad (32) in der ersten Position nicht zwischen den beiden Schenkeln (52) des Bügels (5) angeordnet ist, so dass eine freie Drehung Rahmens (31) um die zweite Drehachse möglich ist,
- wobei der Bügel (5) zum Wechsel aus der ersten Position in die zweite Position und umgekehrt um weniger als 90° schwenkbar ist und
- wobei die Lenkrollenanordnung (L) ferner Halteelemente (53, 9) aufweist, die den Bügel (5) in der ersten Position halten können.

## Beschreibung

Die vorliegende Erfindung betrifft eine Lenkrollenanordnung für ein Möbel, insbesondere für ein Bett,
a. mit einem Halter,
b. mit einer Lenkrolle,
   i. wobei die Lenkrolle wenigstens ein Rad und einen Rahmen aufweist,
   ii. wobei das Rad an dem Rahmen um eine erste Drehachse drehbar gelagert ist,
   iii. wobei der Rahmen zumindest mittelbar an dem Halter um eine zweite Drehachse drehbar gelagert ist,
   iv. wobei die erste Drehachse in einer ersten Ebene liegt und die zweite Drehachse senkrecht auf der ersten Ebene steht,
c. mit einem U-förmigen Bügel, der zwei Schenkel und einen die Schenkel verbindenden Steg aufweist,
   i. wobei die Schenkel zumindest mittelbar um eine dritte Drehachse schwenkbar an dem Halter befestigt sind, die in der ersten Ebene oder in einer Ebene parallel zu der ersten Ebene liegt,
   ii. so dass der Bügel um die dritte Drehachse zwischen einer ersten Position und einer zweiten Position schwenkbar ist,
   iii. wobei der Bügel dann in die zweite Position bewegbar ist, wenn erste Drehachse und die dritte Drehachse im Wesentlichen parallel sind oder zusammenfallen, und
   iv. wobei das Rad in der zweiten Position zwischen den beiden Schenkeln des Bügels angeordnet ist, so dass eine freie Drehung Rahmens um die zweite Drehachse beschränkt ist,
   v. wobei das Rad in der ersten Position nicht zwischen den beiden Schenkeln des Bügels angeordnet ist, so dass eine freie Drehung Rahmens um die zweite Drehachse möglich ist.

Die Erfindung betrifft ferner ein Bett, insbesondere ein Pflegebett mit wenigstens einer solchen Lenkrollenanordnung.

Unter der Bezeichnung "EasyCare" stellt Joerns Healthcare LLC, Arlington, Texas, USA, ein Pflegebett mit einer solchen Lenkrollenanordnung her. Lenkrollen des Bettes ermöglichen ein Fahren des Bettes in alle Richtungen. Sie ermöglichen, dass das Bett zum Beispiel in eine Querrichtung geschoben werden kann. Das macht ein einfaches Manövrieren des Bettes auf wenig Raum möglich. Das ist von Vorteil, wenn das Bett abgestellt werden soll.

Die freie Drehung der Lenkrollen um die zweite Drehachse ist aber nachteilig, wenn das Bett eine längere Strecke geradeaus gefahren werden soll. Dann ist es von Vorteil, wenn sich nicht beide Bettenden quer zu Fahrtrichtung bewegen lassen. Bei dem "EasyCare" ist es daher vorgesehen, dann mit Hilfe des Bügels ein freies Drehen der Lenkrollen an einem Ende des Bettes beschränkt wird. Der Geradeauslauf des Bettes auf längeren Strecken zum Beispiel in einem Flur einer Pflegeeinrichtung wird dadurch verbessert.

Der Bügel dient dazu, eine Drehung der Lenkrollen um die zweite Drehachse zu verhindern oder zumindest zu beschränken. Dadurch wird erreicht, dass die Räder wie Bockrollen funktionieren.

Zum Freigeben der Drehung der Lenkrollen um die zweite Drehachse werden die Bügel der Lenkrollenanordnungen hochgeklappt und umgeschlagen, so dass sie auf einer Oberseite des Halters abgelegt werden können. Damit dieses Umschlagen der Bügel möglich ist, muss der Raum, der für das Umschlagen des Bügels benötigt wird, frei bleiben. Der Raum steht für eine sonstige Gestaltung der Rollenanordnung nicht zu Verfügung.

Hier setzt die vorliegende Erfindung an.

Der vorliegenden liegt die Aufgabe zu Grunde, die bekannte Lenkrollenanordnung so zu verändern, dass mehr Möglichkeiten der Gestaltung der Lenkrollenanordnung möglich sind.

Diese Aufgabe wird erfindungsgemäß dadurch gelöst, dass
a. der Bügel zum Wechsel aus der ersten Position in die zweite Position und umgekehrt um weniger als 90° schwenkbar ist und
b. die Lenkrollenanordnung ferner Halteelemente aufweist, die den Bügel in der ersten Position halten können.

Anders als die Bügel des aus dem Stand der Technik bekannten und eingangs beschriebenen Bettes wird der Bügel, wenn er zum Freigeben der Drehung der Lenkrolle um die zweite Drehachse in die erste Position geschwenkt wird, nicht umgeschlagen, sondern nur wenigstens so weit nach oben geschwenkt, dass die Lenkrolle wieder frei um die zweite Drehachse geschwenkt werden können und die Rollen nicht an den Schenkeln des Bügels anschlagen. Der Winkel, um den der Bügel dazu aus seiner zweiten Position in seine erste Position geschwenkt wird, kann deutlich kleiner sein als 90°. Der Winkel kann zum Beispiel 40°, insbesondere 43° bis 47° betragen.

Die Schenkel eines Bügels einer erfindungsgemäßen Lenkrollenanordnung können einen Bogen zwischen den Verbindungsstellen zwischen dem Steg und den Schenkeln und der dritten Drehachse aufweisen. Der Bogen kann insbesondere ein Aufwärtsbogen sein. Dieser Aufwärtsbogen kann nützlich sein, wenn das Rad nicht oder noch nicht durch den Bügel blockiert ist, aber durch eine Drehung um die zweite Drehachse in eine blockierte Stellung zwischen den Schenkeln des Bügels gebracht werden soll.

Die Schenkel eines Bügels einer erfindungsgemäßen Lenkrollenanordnung können von dem Steg aus betrachtet über die dritte Drehachse hinausragen. In dem über die dritte Drehachse hinausragenden Teil wenigstens eines Schenkels kann ein erstes Halteelement vorgesehen sein. Es ist auch möglich, dass in dem über die dritte Drehachse hinausragenden Teil beider Schenkel ein erstes Halteelement vorgesehen ist.

In der ersten Position des Bügels kann das erste Halteelement mit einem zweiten Haltelement zusammenwirken, das an dem Halter befestigt ist, um den Bügel in der ersten Position zu halten.

Die Halteelemente können einen Kugelschnäpper, einen Magnetschnäpper, einen Druckmagnetschnäpper, eine Federschnäpper, eine Klemmvorrichtung, bspw. einen Gummipuffer bilden oder aufweisen. Insbesondere kann das erste Halteelement eine Ausnehmung aufweisen und das zweite Halteelement kann ein Kugelschnäpper sein. Die Ausnehmung und der Kugelschnäpper können zum Halten des Bügels in der ersten Position zusammenwirken.

In dem über die dritte Drehachse hinausragenden Teil wenigstens eines Schenkels des Bügels einer erfindungsgemäßen Lenkrollenanordnung kann ein bogenförmiges Langloch vorgesehen sein, deren Rand eine Kugel des Kugelschnäppers hält, wenn der Bügel nicht in der ersten Position ist. Dadurch kann die Kugel des Kugelschnäppers nicht aus dem Schnäpper herausfallen, was je nach Ausführung des Kugelschnäppers möglich ist.

Der Bügel einer erfindungsgemäßen Lenkrollenanordnung kann eine Lasche aufweisen, die von dem Steg aus nach außen ragt und ein Pedal zur Betätigung des Bügels bildet. Durch das Pedal kann die Bedienung des Bügels mit einem Fuß erleichtert werden. Mit dem Fuß kann auf das Pedal gedrückt werden oder es kann angehoben werden, wenn mit dem Fuß von unten gegen das Pedal gedrückt wird.

Eine erfindungsgemäße Lenkrollenanordnung kann eine Haube aufweisen, die über den Halter gestülpt ist und aus deren Öffnung die Lenkrolle und der Bügel bzw. Teile der Lenkrolle und des Bügels herausragen.

Eine erfindungsgemäße Lenkrollenanordnung kann eine zweite Lenkrolle aufweisen. Diese zweite Lenkrolle kann wie die erste Lenkrolle ein Rad und einen Rahmen aufweisen, wobei das Rad an dem Rahmen um eine vierte Drehachse drehbar befestigt ist, die parallel zur ersten Drehachse ist, und wobei der Rahmen zumindest mittelbar an dem Halter um eine fünfte Drehachse drehbar befestigt ist, die senkrecht zu der ersten Ebene liegt. Die erste und die zweite Lenkrolle können baugleich sein.

Eine erfindungsgemäße Lenkrollenanordnung kann Teil eines erfindungsgemäßen Bettes, insbesondere eines medizinischen Bettes sein, das ein Untergestell und ein Obergestell aufweist. Dabei kann das Obergestell eine Auflage für eine Matratze aufweisen. Das Untergestell kann Streben und/oder Stützen aufweisen, über die das Obergestell auf einem Untergrund abgestützt ist. Das Untergestell kann die Lenkrollenanordnung aufweisen und ggf. mit gleichen oder anderen, erfindungsgemäßen oder nicht erfindungsgemäßen Lenkrollenanordnungen oder Rädern auf dem Untergrund gefahren werden.

Das Untergestell eines solchen Bettes kann einen Mechanismus zum Anheben und Absenken des Obergestells aufweisen. Ebenso ist es möglich, dass das Obergestell einen oder mehrere Mechanismen zum Schrägstellen oder Anheben oder Absenken von Teilen der Auflage für die Matratze aufweist. Das Bett kann einen oder mehrere Antriebe zum Betätigen des Mechanismus oder der Mechanismen aufweisen.

Weitere Merkmale und Vorteile eines Ausführungsbeispiels der Erfindung ist unter Bezugnahme auf die Zeichnungen nachfolgend beschrieben. Es zeigen:

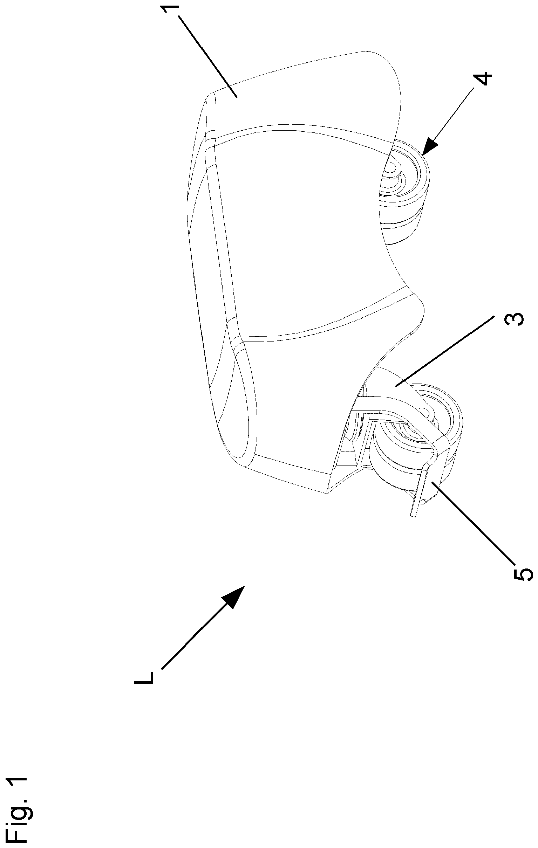

- Fig. 1 eine perspektivische Ansicht einer erfindungsgemäßen Lenkrollenanordnung mit einer feststellten Lenkrolle,

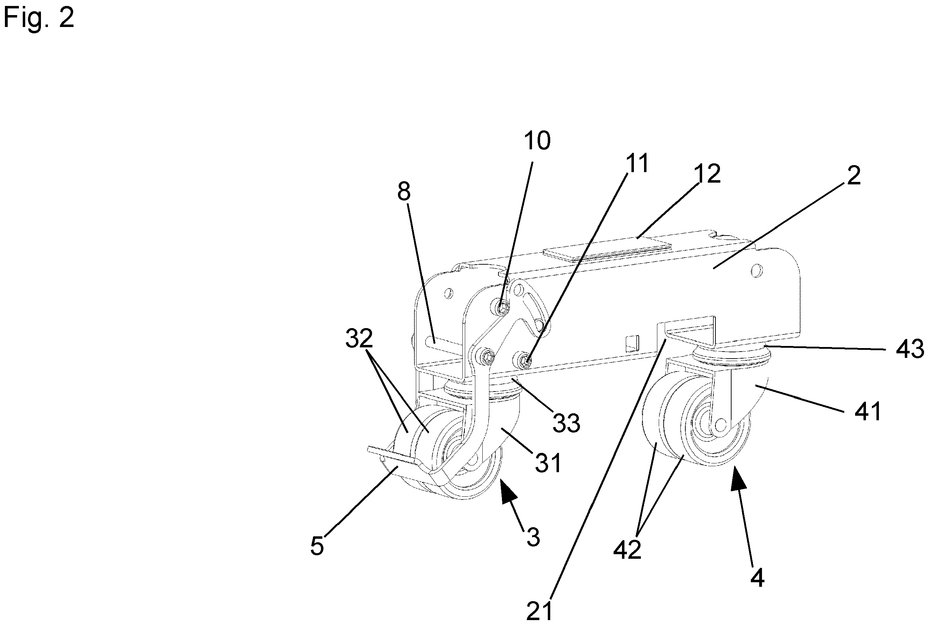

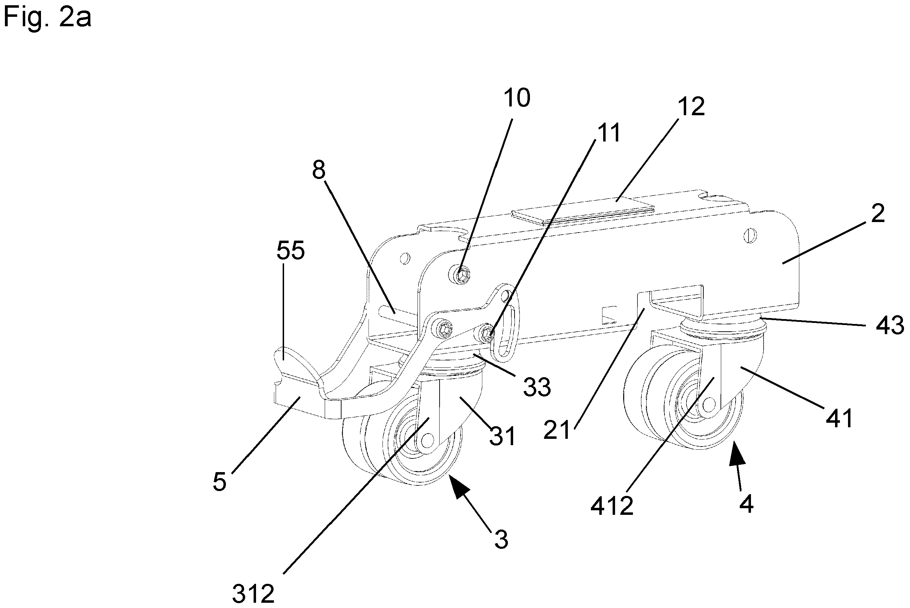

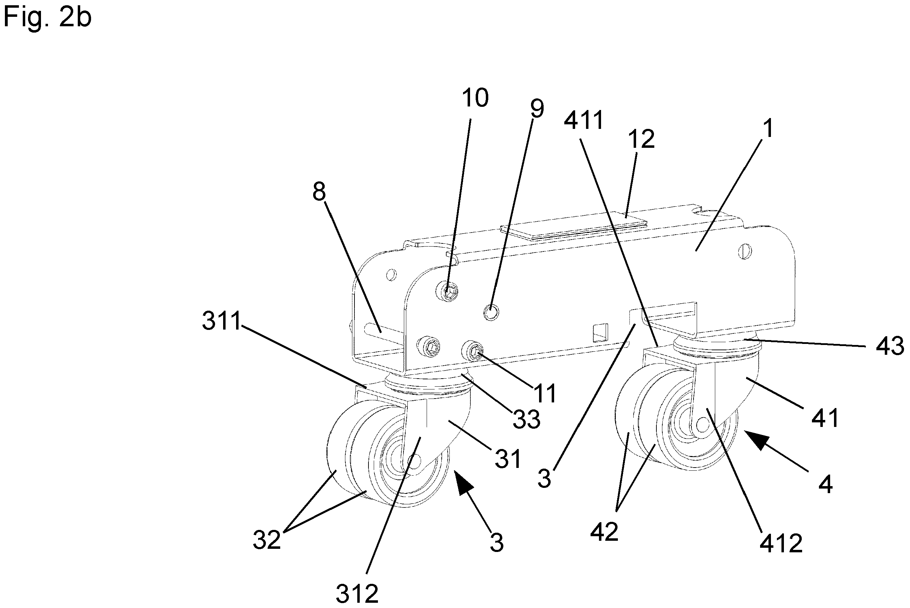

- Fig. 2 eine Ansicht entsprechend Fig. 1 der Lenkrollenanordnung mit der feststellten Lenkrolle jedoch ohne eine Haube,
- Fig. 2a eine Ansicht entsprechend Fig. 2 der Lenkrollenanordnung ohne Haube mit der Lenkrolle frei drehbar,
- Fig. 2b eine Ansicht entsprechend Fig. 2 der Lenkrollenanordnung ohne Haube und ohne Bügel,

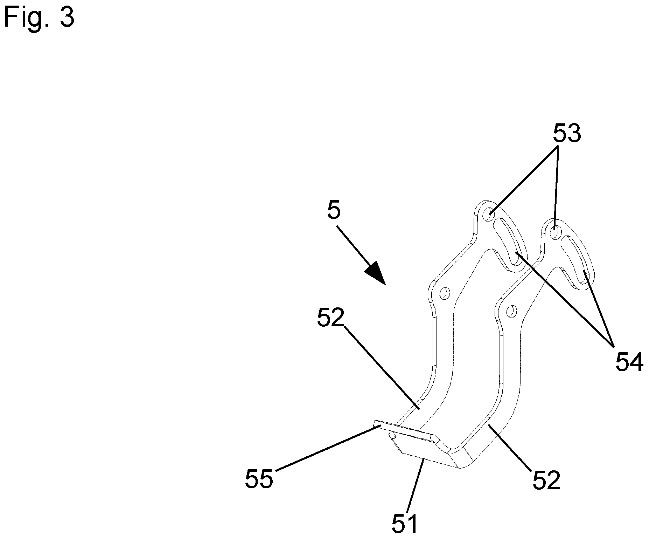

- Fig. 3 eine perspektivische Ansicht des Bügels der erfindungsgemäßen Lenkrollenanordnung ohne Haube und mit festgestellter Lenkrolle,

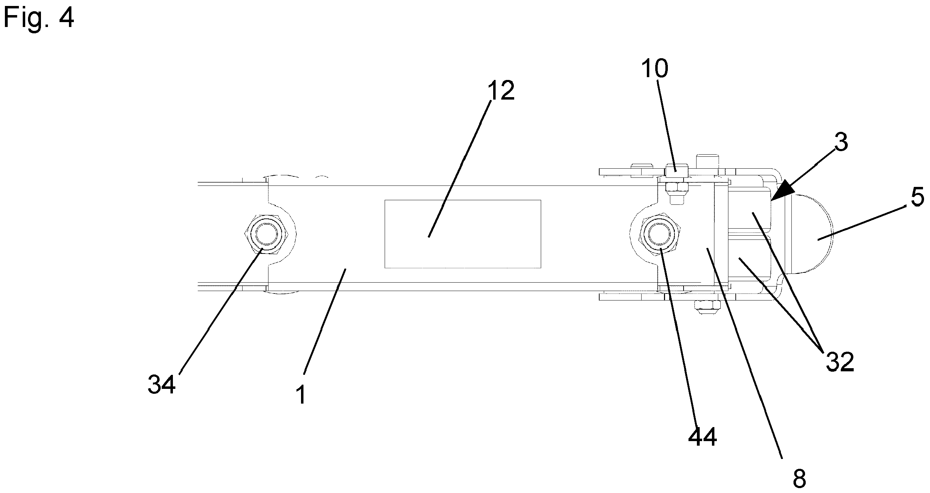

- Fig. 4 eine Draufsicht auf die Lenkrollenanordnung ohne Haube und mit festgestellter Lenkrolle,

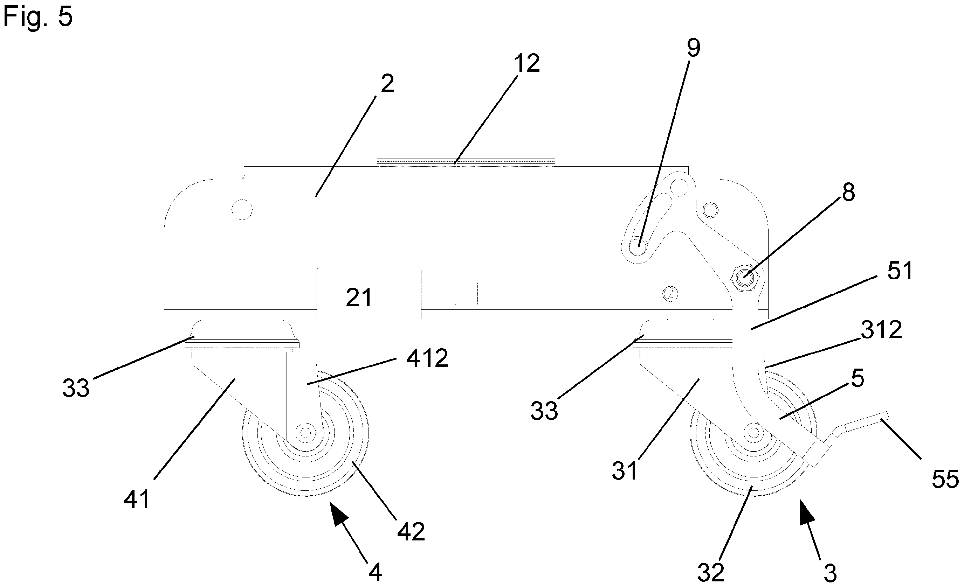

- Fig. 5 eine Seitenansicht der Lenkrollenanordnung ohne Haube und mit festgestellter Lenkrolle,
- Fig. 6 ein Fahrgestell mit zwei erfindungsgemäßen Lenkrollenanordnungen aus den Figuren 1 bis 5 für ein erfindungsgemäßes Bett und

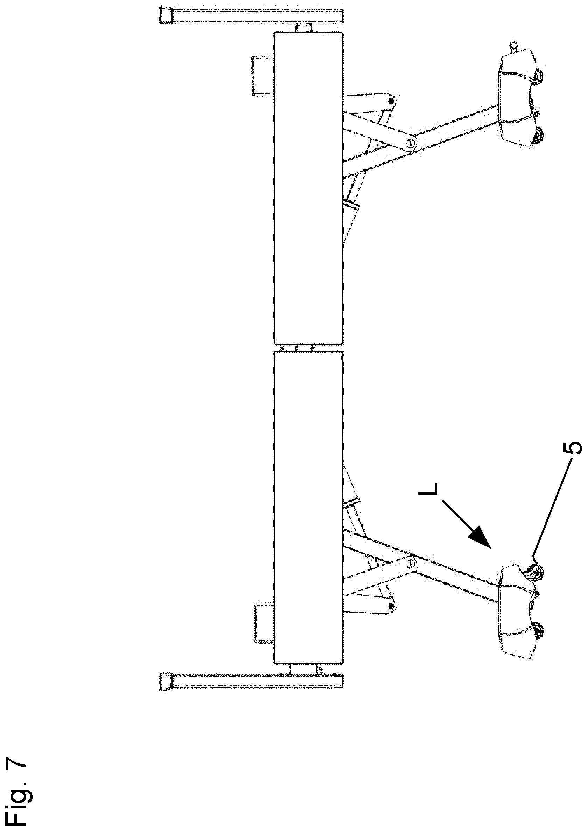

- Fig. 7 ein erfindungsgemäßes Bett mit dem Fahrgestell aus Fig. 6.

Es ist nicht notwendig, dass eine erfindungsgemäße Lenkrollenanordnung alle nachfolgend beschriebenen Merkmale aufweist. Es ist auch möglich, dass eine erfindungsgemäße Lenkrollenanordnung nur einzelne Merkmale der nachfolgend beschriebenen Ausführungsbeispiels aufweist.

Die erfindungsgemäße Lenkrollenanordnung L weist eine Haube 1, einen Halter 2, eine erste Lenkrolle 3, eine zweite Lenkrolle 4 und einen Bügel 5 auf.

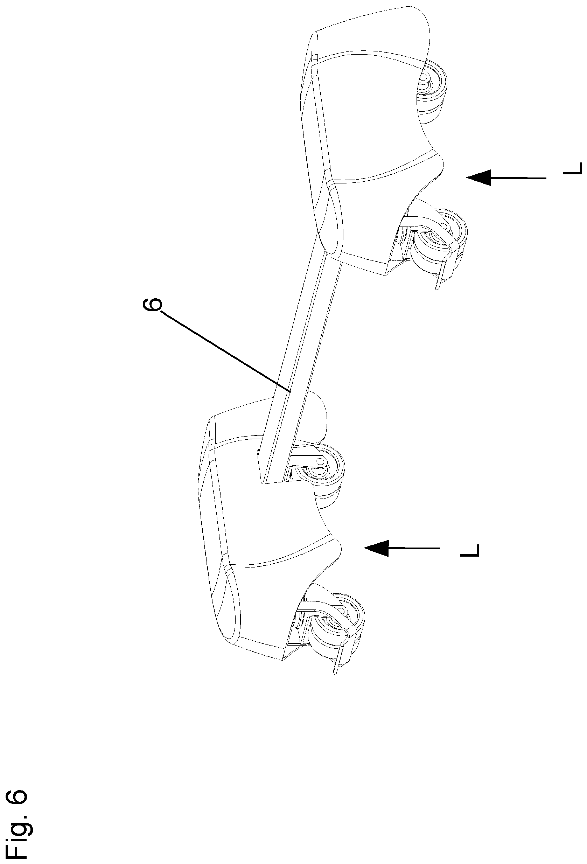

Der Halter 2 ist aus einem Abschnitt eines Vierkantrohr hergestellt. Durch Bearbeitung sind verschiedene Ausnehmungen und Löcher in den Abschnitt eingebracht worden. Darunter ist eine Ausklinkung 21 in die ein anderes Rechteckrohr 6 eingesetzt werden kann, das zwei erfindungsgemäße Lenkrollenanordnungen L verbindet, die so zusammen mit dem anderen Rechteckrohr 5 das in der Fig 6 dargestellte Fahrgestell des erfindungsgemäßen Bettes B bilden können. Die beiden Halter 2 und das andere Rechteckrohr 6 können durch Schweißen miteinander verbunden sein.

An einer Unterseite des Halters 2 sind in an die längsseitigen Enden des Halters 2 angrenzenden Bereichen die erste bzw. die zweite Lenkrolle 3, 4 befestigt. Die Lenkrollen 3, 4 weisen je einen Rahmen 31, 41 auf. In den Rahmen ist je ein Rad 32, 42 um je eine erste Drehachse drehbar gelagert. Die ersten Drehachsen liegen in einer Ebene, die parallel zum Untergrund liegt, auf dem die Lenkrollenanordnung L fahren kann. Die Rahmen sind im Wesentlichen U-förmig und haben je einen Steg 311, 411 und je zwei Schenkel 312, 412, die parallel zu einander verlaufen und an Enden des Stegs des jeweiligen Rahmens 31, 42 angeschlossen sind.

Der Rahmen 31, 42 jeder Lenkrolle 3, 4 ist über ein Drehlager 33, 43, das an dem Halter 2 mit Schrauben 34, 44 angeschraubt ist, mit dem Halter 2 so verbunden, das der Rahmen 31, 41 sich um eine zweite Drehachse drehen kann. Die zweiten Drehachsen stehen senkrecht zu der Ebene, in der die ersten Drehachsen liegen. Die zweite Drehachse jeder der Lenkrollen 3, 4 sind windschief zu den ersten Drehachsen der jeweiligen Lenkrollen 3, 4.

Die Drehung des Rahmens 31 der ersten Lenkrolle 3 um die zweite Drehachse kann blockiert bzw. beschränkt werden. Dazu ist der Bügel 5 vorgesehen. Der Bügel 5 weist einen Steg 51 und zwei Schenkel 52. Der Steg 51 und die Schenkel 52 sind U-förmig zueinander angeordnet. Die Schenkel 52 schließen an Enden des Stegs 51 an. Die Schenkel sind parallel zueinander und der Abstand der Schenkel 52 voneinander entspricht der Breite des Vierkantrohres, das den Halter 2 bildet.

Der Bügel ist um eine dritte Drehachse schwenkbar an dem Halter 2 gelagert. Dazu weist der Halter 2 zwei fluchtende Bohrungen 21 durch Seitenwände am Ende des Vierkantrohres auf, an dem die erste Lenkrolle 3 befestigt ist. Die Schenkel 52 des Bügels 5 weisen je eine Bohrung auf, die ebenfalls fluchten. Der Bügel 5 ist so Halter 2 angeordnet, dass die Bohrungen in den Schenkeln 52 des Bügels 5 und die Bohrungen in den Seitenwänden fluchten. Eine Schraube 8 ist durch die Bohrungen hindurchgesteckt und mit einer Mutter gesichert. Diese Schraube 8 bildet die dritte Drehachse, um die der Bügel 5 schwenken kann.

Die Schenkel 52 sind nicht gerade, sondern S-förmig geschwungen. Sie haben zwischen den Verbindungstellen mit dem Steg 51 und der dritten Drehachse eine Aufwärtsbogen und zwischen der dritten Drehachse und ihren freien Enden einen Abwärtsbogen, also in einem über die dritte Drehachse hinausragenden Teil der Schenkel 52. Am Ende der Schenkel ist jeweils ein erstes Halteelement 53 und ein bogenförmiges Langloch 54 vorgesehen, wobei das bogenförmige Langloch 54 auf einem gedachten Ring um die dritte Drehachse liegt. Das erste Halteelement 53 wird durch ein Kreisloch gebildet, das ebenfalls auf dem gedachten Ring um die dritte Drehachse liegt.

Das erste Haltemittel 53 wirkt mit einem zweiten Haltemittel 9 zusammen. Das zweite Haltemittel 9 wird durch einen Kugelschnäpper gebildet, der in einer Bohrung in der Seitenwand des Vierkantrohres eingesetzt wird.

Der Bügel 5 kann zwischen zwei Positionen geschwenkt werden. In der ersten Position ist eine Kugel des Kugelschnäppers 9 in dem ersten Haltemittel 53 eingerastet. In dieser ersten Position kann das Rad 32 der ersten Lenkrolle 3 frei gedreht werden. Das Rad 32 hat einen Schwenkbereich, der frei sein muss, damit es sich frei drehen kann.

In der zweiten Position ist der Steg 51 und die nicht über die dritte Drehachse hinausragenden Teile der Schenkel 52 gegenüber der ersten Position abgesenkt. Durch eine Kraft, die den Steg nach unten drückt, kann der Bügel nach unten geschwenkt werden. Die Kraft drückt dabei auch die Kugel des Kugelschnäppers aus den ersten Halteelementen 53. Die Schenkel 52 kommen durch das Herunterdrücken des Stegs 51 in einen Schwenkbereich des Rades 32 der ersten Lenkrolle 3. Der Schwenkbereich des Rades 32 und ein Schwenkbereich der Schenkel 52 schneiden einander. Es versteht sich, dass nicht beide gleichzeitig im Schnittbereich sein können.

Die erste Position und die zweite Position sind ferner durch zwei Anschläge definiert, die durch Schrauben 10, 11 gebildet sind, an denen der Bügel 5 in den beiden Position anliegt.

Man kann nun drei Fälle unterscheiden, nämlich
a. dass das Rad 32 nicht in dem Schwenkbereich der Schenkel ist, wenn der Steg 51 nach unten gedrückt wird und so steht, dass die Schenkel bei Absenken des Stegs 52 auf beiden Seiten des Rads 32 kommen,
b. dass das Rad 32 in dem Schwenkbereich der Schenkel ist, wenn der Steg 51 nach unten gedrückt wird, und
c. dass das Rad 32 nicht in dem Schwenkbereich der Schenkel ist, wenn der Steg 51 nach unten gedrückt wird und so steht, dass die Schenkel bei Absenken des Stegs 52 nicht auf beiden Seiten des Rads 32 kommen.

Im Fall a kann der Bügel ohne weiteres seine zweite Position erreichen. Die Kugel des Kugelschnäppers gleitet dann in dem Langloch 54 bis zu dessen unterem Ende. Die zweite Position des Bügels ist durch das untere Ende des Langlochs 54 definiert. Die beidseitig des Rades 32 angeordneten Schenkel 52 des Bügels 2 beschränken eine Drehung des Rahmens 31 und damit des Rads 32 um die zweite Drehachse. Eine Drehung der Lenkrolle ist damit blockiert und die Lenkrolle 3 verhält sich dann weitgehend wie eine Bockrolle, wodurch ein Geradeauslauf der Lenkrollenanordnung und eines damit ausgestatteten Möbels, insbesondere eines Bettes verbessert wird.

Im Fall b fällt der Bügel 5 auf das Rad 32, dass sich im Schwenkbereich eines der Schenkel 52 des Bügels befindet. Der Bügel kann dann seine zweite Position nicht erreichen. Die Kugel des Kugelschnäppers ist dann zwar in dem Langloch, erreicht aber dessen unteres Ende nicht. Eine Drehung des Rades 32 ist um die zweite Drehachse ist dann nicht behindert oder blockiert. Wird in dem Fall b dann das Rad 32 um die zweite Drehachse gedreht, bewegt es sich unter dem Bügel. Das Rad 32 kann dabei so um die zweite Drehachse gedreht werden, dass es aus dem Schwenkbereich der Schenkel 52 kommt. Der Bügel kann sich dann nach unten absenken. Das Rad 32 kann dabei so gedreht werden, dass die Schenkel bei Absenken des Stegs 52 auf beiden Seiten des Rads 32 kommen. Dann tritt Fall a ein und eine Drehung des Rades 32 um die zweite Drehachse ist behindert oder blockiert.

Das Rad 32 kann aber so gedreht werden, dass die Schenkel bei Absenken des Stegs 52 nicht auf beiden Seiten des Rads 32 kommen. Dann tritt der Fall c ein, der nun vorgestellt wird.

Wird im Fall c das Rad 32 um die zweite Drehachse gedreht, kann es sein, dass es in den Schwenkbereich eines der Schenkel 32 kommt, in dem dieser Schenkel in der zweiten Position des Bügels dann auch ist. Eine weitere Drehung des Rades 32 um die zweite Drehachse ist dann aber nicht blockiert. Vielmehr drückt das Rad so gegen den Schenkel 32, dass der Bügel angehoben wird. Das ist insbesondere aufgrund des Aufwärtsbogens des Schenkels in diesem Bereich möglich, an dem das Rad 32 mit dem Schenkel 52 in Kontakt kommt. Wird das Rad 32 dann in die gleiche Richtung weiter gedreht wird es unter dem Schenkel 52 drunter weg gedreht, so dass es in den Bereich zwischen den Schenkel 52 kommt und dann der Fall a eintritt. Auch dann ist das Rad 32 durch die Schenkel blockiert.

In den Fällen b und c kann die Drehung des Rades 32 um die zweite Drehachse, um das Rad zwischen die Schenkel 52 des Bügels 5 zu bekommen, dadurch erreicht werden, dass die Lenkrollenanordnung oder das Möbel, an dem die Lenkrollenanordnung befestigt ist, auf dem Untergrund bewegt wird, insbesondere in die Richtung, in der das Rad 32 festgesetzt werden soll.

Der Bügel 5 weist eine Lasche 55 auf, die vom Steg aus nach außen ragt. Diese Lasche 55 bildet ein Pedal, welches eine Bedienung des Bügels mit dem Fuß erleichtert.

An der Oberseite des den Halter 2 bildenden Vierkantrohres und der Innenseite der Haube 1 zusammenwirkende Teile 12 eines Klettverschlusses angeordnet, über den die Haube 1 und der Halter 2 miteinander verbunden sind, wenn die Haube 1 über den Halter 2 gestülpt ist.

## Patentansprüche

1. Lenkrollenanordnung (L) für ein Möbel, insbesondere für ein Bett,
- mit einem Halter (2),
- mit einer ersten Lenkrolle (3),
- wobei die erste Lenkrolle (3) ein wenigstens Rad (32) und einen Rahmen (31) aufweist,
- wobei das Rad (32) an dem Rahmen (31) um eine erste Drehachse Drehachsedrehbar gelagert ist,
- wobei der Rahmen (31) zumindest mittelbar an dem Halter (2) um eine zweite Drehachse drehbar gelagert ist,
- wobei die erste Drehachse in einer ersten Ebene liegt und die zweite Drehachse senkrecht auf der ersten Ebene steht,
- mit einem U-förmigen Bügel (5), der zwei Schenkel (52) und einen die Schenkel (52) verbindenden Steg (51) aufweist,
- wobei die Schenkel (52) zumindest mittelbar um eine dritte Drehachse schwenkbar an dem Halter (2) befestigt sind, die in der ersten Ebene oder in einer Ebene parallel zu der ersten Ebene liegt,
- wobei der Bügel (5) um die dritte Drehachse zwischen einer ersten Position und einer zweiten Position schwenkbar ist,
- wobei der Bügel (5) dann in die zweite Position bewegbar ist, wenn erste Drehachse und die dritte Drehachse im Wesentlichen parallel sind oder zusammenfallen, und
- wobei das Rad (32) in der zweiten Position zwischen den beiden Schenkeln (52) des Bügels (52) angeordnet ist, so dass eine freie Drehung Rahmens (31) um die zweite Drehachse beschränkt ist,
- wobei das Rad (32) in der ersten Position nicht zwischen den beiden Schenkeln (52) des Bügels (5) angeordnet ist, so dass eine freie Drehung des Rahmens (31) um die zweite Drehachse möglich ist,
**dadurch gekennzeichnet, dass**
- der Bügel (5) zum Wechsel aus der ersten Position in die zweite Position und umgekehrt um weniger als 90° schwenkbar ist und
- die Lenkrollenanordnung (L) ferner Halteelemente (53, 9) aufweist, die den Bügel (5) in der ersten Position halten können.

2. Lenkrollenanordnung (L) nach Anspruch 1, **dadurch gekennzeichnet, dass** die Schenkel (52) einen Bogen zwischen den Verbindungsstellen zwischen dem Steg (51) und den Schenkeln (52) und der dritten Drehachse aufweisen.

3. Lenkrollenanordnung (L) nach Anspruch 1 oder 2, **dadurch gekennzeichnet, dass** die Schenkel (52) von dem Steg (51) aus betrachtet über die dritte Drehachse hinausragen und dass in dem über die dritte Drehachse hinausragenden Teil wenigstens eines Schenkels (52) ein erstes Halteelement (53) vorgesehen ist.

4. Lenkrollenanordnung (L) nach Anspruch 3, **dadurch gekennzeichnet, dass** in der ersten Position des Bügels das erste Halteelement (53) mit einem zweiten Haltelement (9) zusammenwirkt, das an dem Halter (2) befestigt ist, um den Bügel (5) in der ersten Position zu halten.

5. Lenkrollenanordnung (L) nach Anspruch 4, **dadurch gekennzeichnet, dass** die Halteelemente (53, 9) einen Kugelschnäpper, einen Magnetschnäpper, einen Druckmagnetschnäpper, eine Federschnäpper bilden oder aufweisen.

6. Lenkrollenanordnung (L) nach Anspruch 4 oder 5, **dadurch gekennzeichnet, dass** das erste Halteelement (53) eine Ausnehmung aufweist und dass das zweite Halteelement (9) ein Kugelschnäpper ist.

7. Lenkrollenanordnung (L) nach Anspruch 6, **dadurch gekennzeichnet, dass** in dem über die dritte Drehachse hinausragenden Teil wenigstens eines Schenkels (52) ein bogenförmiges Langloch (54) vorgesehen ist, deren Rand eine Kugel des Kugelschnäppers (9) hält, wenn der Bügel (5) nicht in der ersten Position ist.

8. Lenkrollenanordnung (L) nach einem der Ansprüche 1 bis 7, **dadurch gekennzeichnet, dass** der Bügel (5) eine Lasche (55) aufweist, die von dem Steg (51) aus nach außen ragt und ein Pedal zur Betätigung des Bügels (5) bildet.

9. Lenkrollenanordnung (L) nach einem der Ansprüche 1 bis 8, **dadurch gekennzeichnet, dass** die Lenkrollenanordnung (L) eine Haube (1) aufweist, die über den Halter (2) gestülpt ist und aus deren Öffnung die erste Lenkrolle (3) und der Bügel (5) herausragen.

10. Lenkrollenanordnung (L) nach einem der Ansprüche 1 bis 9, **dadurch gekennzeichnet, dass** die Lenkrollenanordnung (L) eine zweite Lenkrolle (4) aufweist,
- wobei diese zweite Lenkrolle (4) ein Rad und einen Rahmen aufweist,
- wobei das Rad an dem Rahmen um eine vierte Drehachse drehbar befestigt ist, die parallel zur ersten Drehachse ist, und
- wobei der Rahmen zumindest mittelbar an dem Halter um eine fünfte Drehachse drehbar befestigt ist, die senkrecht zu der ersten Ebene liegt.

11. Bett, insbesondere medizinisches Bett mit einem Untergestell und einem Obergestell, wobei das Obergestell eine Auflage für eine Matratze aufweist und das Untergestell Streben und oder Stützen aufweist, über die das Obergestell auf einem Untergrund abgestützt ist, wobei das Untergestell eine Lenkrollenanordnung (L) aufweist, mittels der das Bett auf dem Untergrund fahrbar ist,
**dadurch gekennzeichnet, dass**
die Lenkrollenanordnung (L) eine Lenkrollenanordnung (L) nach einem der Ansprüche 1 bis 10 ist.

12. Bett nach Anspruch 11, **dadurch gekennzeichnet, dass** das Untergestell einen Mechanismus zum Anheben und Absenken des Obergestells aufweist.

13. Bett nach Anspruch 11 oder 12, **dadurch gekennzeichnet, dass** das Obergestell einen oder mehrere Mechanismen zum Schrägstellen oder Anheben oder Absenken von Teilen der Auflage für die Matratze aufweist.
